# EUROPÄISCHE PATENTANMELDUNG

(11) **EP 1 952 732 A2**
(43) Veröffentlichungstag der Anmeldung: **06.08.2008**
(21) Anmeldenummer: 08001698.3
(22) Anmeldetag: 30.01.2008
(51) Int. Cl.: A47J 27/09

(54) **Gargefäss sowie Deckel und Dichtung für ein Gargefäss**

(30) Priorität: 02.02.2007 DE 202007001793 U
(71) Anmelder: Synkrona AG, 6370 Stans (CH)
(72) Erfinder: Schultz, Horst, 65239 Hochheim (DE)
(74) Vertreter: Herden, Andreas F.

(57) **Zusammenfassung**

Die Erfindung sieht ein Gargefäß (1) zum Garen von Speisen unter erhöhtem Druck mit einem Topf (2) mit Boden und einer Topfwand (11) vor, wobei die Topfwand am oberen Ende einen vorzugsweise nach außen gerichteten Rand (3) aufweist. Es sind ein Deckel (12) zum Verschließen des Gargefäßes und ein Dichtring (4) zum Abdichten des Gargefäßes gegenüber dem Umgebungsdruck, sowie eine Einrichtung zur: Verhinderung des Druckaufbaus innerhalb des Gargefäßes (1) bei nicht korrekt geschlossenem und/oder fehlgepaarten Bestandteilen des Gargefäßes (1) vorgesehen.

## Beschreibung

Die Erfindung betrifft allgemein Gargefäße zum Garen von Speisen unter erhöhtem Druck und betrifft im speziellen ein Gargefäß mit einem Topf mit Boden und Topfwand, wobei die Topfwand am oberen Ende einen vorzugsweise nach außen gerichteten Rand aufweist, mit einem Deckel zum Verschließen des Gargefäßes und einem Dichtring zum Abdichten des verschlossenen Gargefäßes gegenüber dem Umgebungsdruck.

Gargefäße, welche den Garvorgang mit erhöhtem Druck ermöglichen sind seit langem bekannt und erfreuen sich vielfältiger Anwendung, insbesondere wegen der damit möglichen schonenden und energiesparenden Zubereitung der Speisen.

Wesentlich ist hierbei jedoch, daß das heiße und unter erhöhtem Druck stehende Gargefäß stets sicher und mit möglich hoher Zuverlässigkeit bedienbar ist. Insbesondere der zuverlässigen Abdichtung derartiger Gargefäße kommt erhöhte Bedeutung zu und ist es ein stetes Anliegen die Handhabung dieser Gargefäße sicherer und einfacher zu gestalten.

Aus der EP 1416837 ist beispielsweise die Verwendung einer Lippendichtung für Dampfdrucktöpfe bekannt. Die Lippendichtung weist einen im wesentlichen U-förmigen Querschnitt auf und umfasst einen zentralen Abschnitt sowie einen unteren und oberen Lippenabschnitt. Eine solche Lippendichtung gestattet regelmäßig das sichere und dauerhaft zuverlässige Abdichten des Gargefäßes.

Mit dem vermehrten Einsatz dieser umgangssprachlich auch als Dampfdrucktöpfe bezeichneten Gargefäße treten jedoch neue und unerwartete Probleme auf. Gerade in jüngster Zeit kommt es immer häufiger vor, daß hochwertige und zuverlässige Produkte renommierter Hersteller mit billigen und technisch schlecht verwirklichten Versionen kopiert werden und dabei diese Kopien den nötigen Sicherheitsanforderungen keinesfalls gerecht werden. Häufig ist die für eine sichere Dichtung nötige Präzision nicht gegeben oder entsprechen Materialdicken und die verwendeten Metalle oder Legierungen nicht den Ansprüchen der Originalprodukte. Da solche Kopien für den Laien aber teilweise nicht vom Original zu unterscheiden sind, entstehen hierdurch erhebliche Gefährdungstatbestände.

Ferner können in Haushalten, in welchen mehr als ein solches Gargerät verwendet wird, durch Fehlpaarungen, dies bedeutet versehentliche Verwendung eines falschen Deckes, also für einen nicht zu diesem Deckel gehörigen Topf ebenfalls große Gefahren entstehen. Da verschieden große Gargefäße angeboten werden, kann es passieren, daß zwar eine mechanische Verbindung zwischen Deckel und Topf entsteht, hierbei aber nicht die richtige Passung für das Dichtsystem gegeben ist. Stimmen die Paßmaße der Deckeldichtung jedoch nicht mit dem verwendeten Topf überein, kann die Deckeldichtung unter größerem Druck eventuell nachgeben und kann dann das unter Druck stehende heiße Gargut entweichen, welches zu schweren Verletzungen führen kann.

Eine Aufgabe der vorliegenden Erfindung ist es, vorstehende Nachteile zumindest zu mildern.

Die Aufgabe der Erfindung wird durch ein Gargefäß gemäß Anspruch 1, einen Dichtring für ein Gargefäß nach Anspruch 13 und einen Deckel für ein Gargefäß nach Anspruch 14 gelöst. Vorteilhafte Ausführungsformen und Weiterbildungen sind in den Unteransprüchen erwähnt.

Die Erfindung stellt ein Gargefäß zum Garen von Speisen unter erhöhtem Druck bereit mit einem Topf mit Boden und einer Topfwand, die am oberen Ende einen vorzugsweise nach außen gerichteten Rand aufweist, und mit einem Deckel zum Verschließen des Gargefäßes und einem Dichtring zum Abdichten des Gargefäßes gegenüber dem Umgebungsdruck, bei welchem eine Einrichtung zur Verhinderung des Druckaufbaus innerhalb des Gargefäßes bei nicht korrekt geschlossenem und/oder fehlgepaarten Bestandteilen des Gargefäßes vorgesehen ist.

Als fehlgepaarte Bestandteile eines Gargefäßes werden dabei im Rahmen der Beschreibung dieser Erfindung Kombinationen von Bestandteilen von Produkten verschiedener Hersteller sowie Kombination von Bestandteilen von Produkten des gleichen Herstellers, welche nicht für den gemeinsamen Einsatz vorgesehen sind, verstanden.

Kommt es, in der Regel unbeabsichtigt, zu einer Fehlpaarung wird bei dem erfindungsgemäßen Gargefäß sicher verhindert, daß sich in dessen Innerem hoher Druck aufbaut, welcher nachfolgend zu erheblichen Gefährdungen führen könnte. Statt dessen wird bei einer Fehlpaarung der bei Erhitzung des Gargutes ansteigende Dampfdruck stets sofort und sicher abgebaut und kann bei starker Erhitzung sogar zu einem zischenden Geräusch führen, welches den Benutzer auf diesem intuitiv bekannte Weise vor einer Weiterbenutzung des Gargefäßes warnt.

Bestimmte bevorzugte Geometrien der erfindungsgemäßen Dichtlippe führen zu einem definierten schrillen Pfeifgeräusch, welches eindringliche akustische Warnwirkung aufweist.

Vorteilhaft umfaßt die Einrichtung zur Verhinderung des Druckaufbaus an dem Dichtring ein oder mehrere Vorsprünge und/oder Vertiefungen, und am Topf jeweils diesen zugeordnete Vertiefungen und/oder Vorsprünge, wobei die ein oder mehreren Vorsprünge und/oder Vertiefungen des Dichtrings im geschlossenen Zustand des Gargefäßes mit den am Topf angeordneten, jeweils zugeordneten Vertiefungen und/oder Vorsprüngen in Eingriff bringbar sind.

Vorteilhaft ist bei einer ersten Ausführungsform der Dichtring am Deckel des Gargefäßes angebracht und weist einen über den gesamten Umfang umlaufenden ringförmigen Vorsprung auf, welcher in eine im Topfrang angeordnete, ebenfalls um den gesamte Umfang des Topfrandes umlaufende Vertiefung eingreifen kann.

In weiterer erfindungsgemäßer Ausgestaltung kann jedoch auch mehr als ein Vorsprung und mehr als eine zugeordnete Vertiefung verwendet werden.

Wenn sich bei dieser letzteren Ausführungsform im geschlossenen Zustand des Gargefäßes, der Dichtring und die Dichtlippe entlang der Topfwand des Topfes erstrecken und die den am Topf angeordneten Vertiefungen und/oder Vorsprünge jeweils mit den zugeordneten Vorsprüngen und/oder Vertiefungen der Dichtfläche des Dichtrings in Eingriff gebracht sind, kann hierdurch eine Kodierung der Deckeldichtung und des jeweils zugehörigen Topfes erreicht so erreicht werden, daß verschiedene Deckel und Töpfe zwar jeweils richtig miteinander benutzt werden können soweit diese für den gemeinsamen Gebrauch vorgesehen sind, aber bei Fehlpaarungen kein Druck innerhalb des Gargefäßes aufgebaut werden kann.

Diese Kodierung kann über die Anzahl der Vorsprünge und/oder Vertiefungen, über deren radiale Lage relativ zu einem Zentrum oder über deren Winkelverteilung entlang des Umfangs der Deckeldichtung und des Topfrandes erfolgen.

Fertigungstechnisch günstig ist es, wenn die Topfwand und/oder der Rand der Topfwand eine oder mehrere Vorsprünge oder Vertiefungen aufweisen, die in der Topfwand oder im Rand der Topfwand jeweils nach innen oder nach außen gedrückt oder geprägt sind.

Für den Benutzer ist ein derart sicheres Gargefäß gut erkennbar und von herkömmlichen Gargefäßen unterscheidbar, wenn die Vorsprünge und/oder Vertiefungen des Dichtrings eine vom Rest des Dichtrings verschiedene Farbe aufweisen.

Ferner ist es auch möglich, durch verschiedene Farben verschiedene Gargefäßkombinationen zu unterscheiden. So kann beispielsweise mit roter Farbe eine erste Serie von zueinander passenden Kombinationen aus Deckel, Topf und Dichtring markiert sein und kann bei einer zweiten Serie die Farbe grün für andere zueinander passende Kombinationen verwenden werden.

Vorteilhaft liegt im geschlossenen Zustand des Gargefäßes die Dichtfläche der Dichtlippe eng an der Topfwand an und baut sich bei Erhitzung des Gargefäßes nur dann Dampfdruck im Innern des Gargefäßes auf, wenn die jeweils zugeordneten Vorsprünge und die Vertiefungen ineinander greifen und ist bei nicht vollständig geschlossenem Gargefäß der Dichtring zumindest stellenweise so von der Topfwand weg gedrückt, daß zwischen Dichtfläche des Dichtrings und Topfwand eine Lücke besteht. Dabei ist es generell vorteilhaft, wenn im geschlossenen Zustand des Gargefäßes beim Erhitzen in dessen Innern kein erhöhter Dampfdruck entsteht, wenn nicht alle zugeordneten Vorsprünge oder Vertiefungen in der Topfwand oder im nach außen gerichteten Rand der Topfwand angeordnet sind.

Die Erfindung umfasst ferner als eigenständig handelbares Produkt einen Dichtring für ein Gargefäß, insbesondere für ein Gargefäß, wie dies vorstehend und nachfolgend detaillierter beschrieben ist, mit zumindest einem Vorsprung oder zumindest einer Vertiefung, welche in Richtung einer Dichtfläche des Dichtrings weisen, und umfaßt einen Deckel für ein Gargefäß mit einem derartigen Dichtring.

Nachfolgend werden unter Bezugnahme auf die Figuren vorteilhafte und bevorzugte Ausführungsformen der Erfindung beschrieben.
Es zeigen
- Figur 1a: einen Querschnitt einer ersten erfindungsgemäße Ausführungsform des Gargefäßes mit einer Dichtlippe mit einem Vorsprung, wobei der Vorsprung in eine zugeordnete Vertiefung eines erfindungsgemäßen Topfes eingreift und die Dichtlippe hinter einer Rille im Deckel angebracht ist,
- Figur 1b: einen Querschnitt einer fehlgepaarten Kombination aus einem Deckel der ersten erfindungsgemäßen Ausführungsform mit einem herkömmlichen Topf, bei welchem der Dichtring eine Dichtlippe mit einem Vorsprung aufweist und der Vorsprung nicht in eine Vertiefung des Topfes eingreifen kann,
- Figur 2a: einen Querschnitt einer zweiten bevorzugten Ausführungsform mit einer Dichtlippe mit einem Vorsprung, wobei der Vorsprung in eine ringförmig umlaufende Vertiefung im oberen Bereich des Topfes eingreift,
- Figur 2b: einen Querschnitt einer dritten bevorzugten Ausführungsform mit einer Dichtlippe mit einem Vorsprung, bei welcher der Vorsprung der Dichtlippe und ein ringförmig umlaufender Vorsprung im oberen Bereich des Topfes so zusammenwirken, daß erhöhter Druck entstehen kann,
- Figur 2c: einen Querschnitt einer fehlgepaarten Kombination mit einem Deckel mit Dichtring entsprechend der dritten, in Fig. 2b gezeigten bevorzugten Ausführungsform mit einem herkömmlichen Topf.

### Detaillierte Beschreibung bevorzugter Ausführungsformen

Die Erfindung wird nachfolgend unter Bezugnahme auf bevorzugte Ausführungsformen im Detail beschrieben. Hierbei werden die gleichen Bezugszeichen für jeweils funktional gleichwirkende Bestandteile des erfindungsgemäßen Gargefäßes verwendet.

Das im ganzen mit 1 bezeichnete Gargefäß umfaßt jeweils einen Topf 2, auf welchen ein Deckel 12 aufsetzbar und mit welchem der Deckel 2 mittels eines Dichtrings 4 fluiddicht verschließbar ist. Derartige Gargefäße sind beispielhaft beschrieben in der EP 2 785 105, deren Offenbarungsgehalt durch Bezugnahme vollständig auch zum Gegenstand dieser Beschreibung gemacht wird.

Bei den nachfolgend beschriebenen bevorzugten Ausführungsformen ist das Schließelement 13 des Deckels 12 radial verschieblich angeordnet und kann beim Schließen den seitlichen, nach außen gerichteten Rand 3 des Topfes 2 untergreifen und weist der seitliche, nach außen gerichteten Rand 3 des Topfes 2 im wesentlichen keine sektorenweise Unterbrechungen auf.

Während des radialen nach innen Bewegens des Schließelements 13 wird der im Deckel 12 angeordnete Dichtring 4 mit dem Rand 3 des Topfes 2 in Anlage gebracht.

Hierbei gestattet eine Einrichtung zur Verhinderung des Druckaufbaus innerhalb des Gargefäßes 1 bei nicht korrekt geschlossenem und/oder fehlgepaarten Bestandteilen 2, 12 des Gargefäßes 1 den Druckaufbau im Innern des Gargefäßes nur bei korrekt positioniertem Deckel 12 auf dem Topf 2 und bei korrekter Paarung von Deckel 12 mit zugehörigem Topf 2

Generell umfaßt die Einrichtung zur Verhinderung des Druckaufbaus innerhalb des Gargefäßes 1 bei nicht korrekt geschlossenem und/oder fehlgepaarten Bestandteilen an dem Dichtring 4 ein oder mehrere Vorsprünge 18 und/oder Vertiefungen 19, und am Topf 2 jeweils diesen zugeordnete Vertiefungen 19 und/oder Vorsprünge 18 umfaßt und die ein oder mehreren Vorsprünge 18 und/oder Vertiefungen 19 des Dichtrings 4 im geschlossenen Zustand des Gargefäßes 1 mit den am Topf 2 angeordneten, jeweils zugeordnete Vertiefungen 19 und/oder Vorsprüngen 18 in Eingriff bringbar sind.

Im geschlossenen Zustand des Gargefäßes 1 entsteht beim Erhitzen in dessen Innern kein erhöhter Dampfdruck, wenn nicht alle zugeordneten Vorsprünge 18 oder Vertiefungen 19 des Dichtrings 4 den zugeordneten Vorsprüngen 18 oder den Vertiefungen 19 in der Topfwand 11 oder im nach außen gerichteten Rand 3 der Topfwand 11 angeordnet sind.

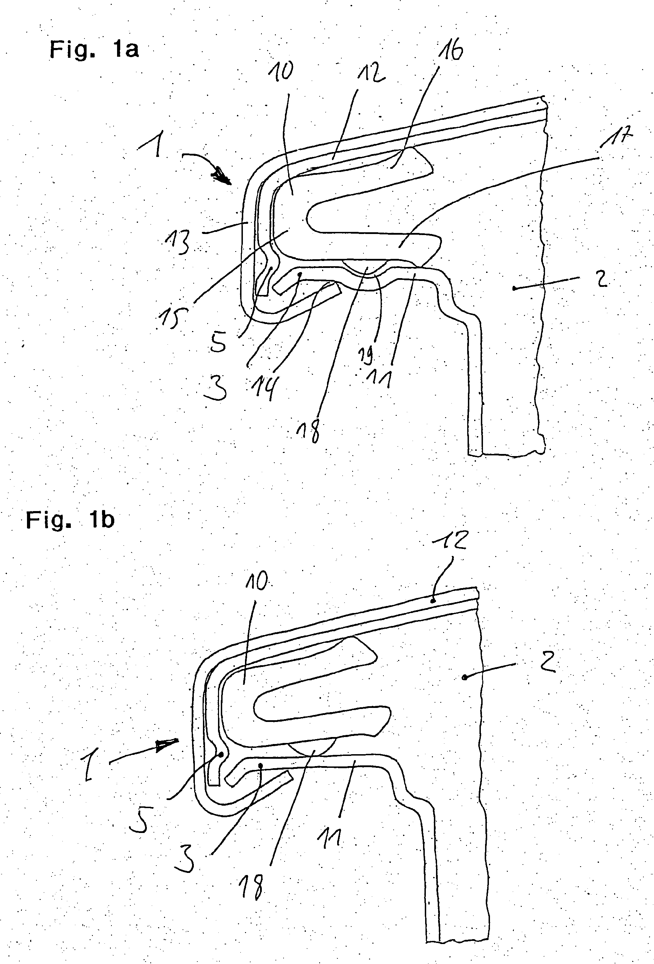

Nachfolgen wird auf Fig 1a Bezug genommen, welche einen Querschnitt einer ersten erfindungsgemäßen Ausführungsform des Gargefäßes 1 mit einer Dichtlippe 10 mit einem Vorsprung 18 zeigt, wobei der Vorsprung 19 in eine zugeordnete Vertiefung 19 eines erfindungsgemäßen Topfes 2 eingreift und der Dichtring 4 mit der Dichtlippe 10 hinter einer seitlich umlaufenden Rille 5 im Deckel 12 angebracht ist.

Im geschlossenen Zustand des Gargefäßes 1 liegt die Dichtlippe 10 des Dichtrings 4 jeweils eng am seitlichen Rand 3 der Topfwand 11 an und kann sich bei Erhitzung des Gargefäßes 1 nur dann Dampfdruck in dessen Innern aufbauen, wenn die jeweils zugeordneten Vorsprünge 18 des Dichtrings 4 oder der Dichtlippe 10 in die Vertiefungen 19 des Topfrandes 3 greifen und wird bei nicht vollständig geschlossenem Gargefäß 1 der Dichtring 4 zumindest stellenweise so vom Topfwand 3 weg gedrückt, daß zwischen Dichtfläche des Dichtrings 4 und Topfwand 11 eine Lücke besteht, welche sicher das Entweichen von sich im Gargefäß 1 erwärmender Luft gestattet.

Figur 1a zeigt hierbei eine im wesentlichen U-förmige Dichtlippe 10 die zwischen einer nach außen gerichteten Topfwand 11 und einem Deckel 12 angebracht ist.

Die Dichtlippe 10 selbst umfaßt bei dieser Ausführungsform einen zentralen Abschnitt 15 sowie einen oberen Lippenabschnitt 16 der an der Innenseite des Deckels anliegt. Des weiteren umfaßt die Dichtlippe einen unteren Lippenabschnitt 17, der einen Vorsprung 18 aufweist, wobei der Vorsprung 18 in eine Vertiefung 19 eingreift, die sich an der nach außen gerichteten Topfwand 11 befindet.

Durch das Ineinander greifen von Vorsprung 18 und Aufnahme 19 ist der Aufbau erhöhten Drucks möglich.

Figur 1b zeigt wie unter Bezugnahme auf Figur 1a beschrieben eine U-förmige Dichtlippe 10, die mit einem Vorsprung 18 versehen ist.

Die nach außen gerichtete Topfwand 11 weist aber keine Vertiefungen aus. Das Zusammenwirken von Vertiefung und Vorsprung ist folglich nicht möglich und wird kein Aufbau eines erhöhten Drucks innerhalb des Gargefäßes 1 ermöglicht.

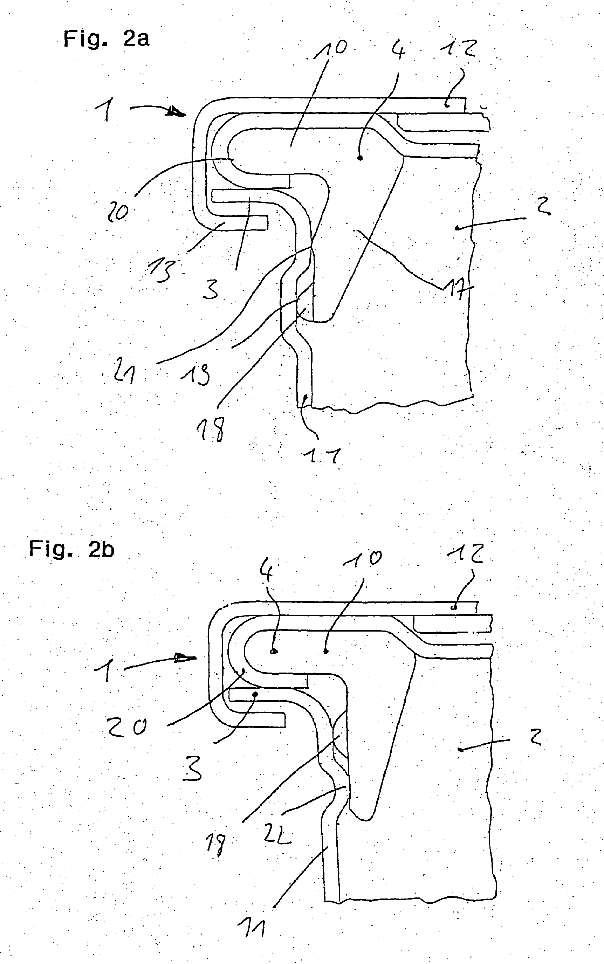

Nachfolgend werden die in den Figuren 2a bis 2c gezeigten weiteren bevorzugten Ausführungsformen beschrieben.

Figur 2a zeigt einen Querschnitt einer zweiten bevorzugten Ausführungsform des Gargefäßes 1 mit einer Dichtlippe 10 mit einem Vorsprung 19, bei welcher der Vorsprung 18 in eine ringförmig umlaufende Vertiefung 19 im oberen Bereich des Topfes 2 eingreift.

Figur 2a zeigt eine Dichtlippe 10, die in der Sicke 20 des Deckels 12 angebracht ist. Der Deckel 12 weist ferner ein Schließelement 13 auf, welches den nach außen gerichteten Rand 3 der Topfwand 11 im geschlossen Zustand des Gargefäßes 1 umgreift. Der untere Lippenabschnitt 17, der mit einem Vorsprung 18 versehen ist, kann eng an der Topfwand 11 anliegen, weil der Vorsprung 18 in einer ringförmig umlaufenden in einem oberen Abschnitt der Topfwand 11 ausgebildeten Vertiefung 19 zur Anlage kommt.

Figur 2b zeigt einen Querschnitt einer dritten bevorzugten Ausführungsform mit einer Dichtlippe 10 mit einem Vorsprung 18, bei welcher der Vorsprung 18 der Dichtlippe 10 und ein ringförmig umlaufender Vorsprung 22 im oberen Bereich des Topfes 11 so zusammenwirken, daß erhöhter Druck im Gargefäß lentstehen kann.

Figur 2b zeigt die an der Topfwand 11 anliegende Dichtlippe 10 mit deren Vorsprung 18, welcher oberhalb des Vorsprungs 22 an der Topfwand 11 anliegt. Die Topfwand 11 weist einen nach innen gedrückte Abschnitt auf, welcher den Vorsprung 22 definiert. Durch das Zusammenwirken eines Vorsprungs 18 mit der nach innen gedrückten Topwand 22 kann das Gargefäß luftdicht verschlossen werden.

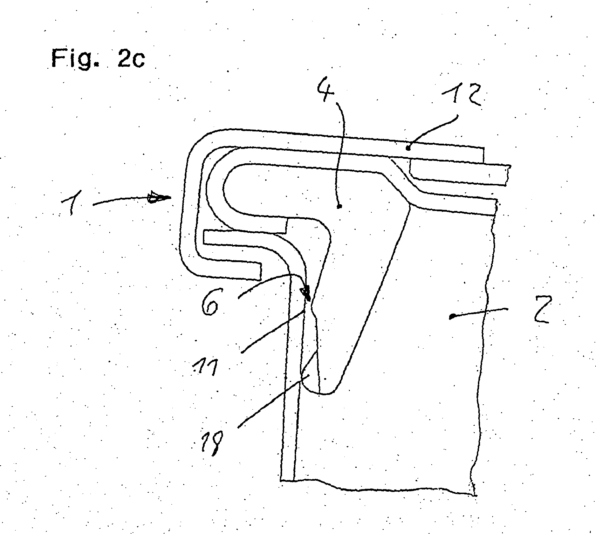

Figur 2c zeigt einen Querschnitt einer fehlgepaarten Kombination mit einem Deckel 12 und mit einem Dichtring 4 entsprechend der dritten, in Fig. 2b gezeigten bevorzugten Ausführungsform jedoch mit einem herkömmlichen Topf, welchem der nach innen gedrückte ringförmig umlaufende Vorsprung 22 fehlt.

Der Aufbau erhöhten Drucks innerhalb des Gargefäßes 1 ist bei dieser Fehlpaarung nicht möglich, da zwischen der Dichtlippe 10 und der Topfwand 11 eine Lücke 6 bestehen bleibt, welche den Austritt erwärmter Luft sicher gestattet.

In weiterer erfindungsgemäßer Ausgestaltung kann alternativ oder zusätzlich zu den Vertiefungen auch eine Öffnung oder können mehrere Öffnungen im Topf oder im Rand des Topfes vorgesehen sein, mit welchen die Vorsprünge der Dichtung jeweils in Eingriff bringbar sind. Bei dieser, in den Zeichnungen nicht näher dargestellten Ausführungsform weist die Dichtung eine Formsteifigkeit auf, welche verhindert, daß im Bereich der Öffnung oder der Öffnungen zu starke Verformungen auftreten.

Die Erfindung wurde vorstehend anhand bevorzugter Ausführungsformen beschrieben, bei welchen jedoch verschiedene Merkmale oder technische Eigenschaften der einen Ausführungsform auch in den jeweils anderen Ausführungsformen verwendet werden können.

### Bezugszeichenliste

- 1: Gargefäß
- 2: Topf
- 3: nach außen gerichteter Rand
- 4: Dichtring
- 5: Rille des Deckels
- 6: Lücke
- 10: Dichtlippe
- 11: Topfwand
- 12: Deckel
- 13: Schließelement des Deckels
- 14: oberer Abschnitt der Topfwand
- 15: zentraler Abschnitt der Dichtlippe
- 16: oberer Lippenabschnitt
- 17: unterer Lippenabschnitt
- 18: Vorsprung
- 19: Vertiefung
- 20: Sicke
- 22: nach innen gedrückter Abschnitt der Topfwand

## Patentansprüche

1. Gargefäß zum Garen von Speisen unter erhöhtem Druck, welcher vorzugsweise beim Erhitzen des Gargutes erzeugt wird umfassend,
einen Topf (2) mit einem Boden und einer Topfwand (11), die am oberen Ende einen Rand (3) aufweist, welcher vorzugsweise nach außen gerichtet ist,
einen Deckel (12) zum Verschließen des Gargefäßes und
einen Dichtring (4) zum Abdichten des Gargefäßes gegenüber dem Umgebungsdruck,
welches **gekennzeichnet ist durch** eine Einrichtung zur Verhinderung des Druckaufbaus innerhalb des Gargefäßes (1) bei nicht korrekt geschlossenem und/oder fehlgepaarten Bestandteilen (2, 12) des Gargefäßes (1).

2. Gargefäß, vorzugsweise nach Anspruch 1, **dadurch gekennzeichnet, daß** insbesondere die Einrichtung zur Verhinderung des Druckaufbaus
an dem Dichtring (4) ein oder mehrere Vorsprünge (18) und/oder Vertiefungen (19) umfaßt, und
am Topf (2) jeweils diesen zugeordnete Vertiefungen (19) und/oder Vorsprünge (18) umfaßt und
die ein oder mehreren Vorsprünge (18) und/oder Vertiefungen (19) des Dichtrings (4) im geschlossenen Zustand des Gargefäßes (1) mit den am Topf (2) angeordneten, jeweils zugeordnete Vertiefungen (19) und/oder Vorsprüngen (18) in Eingriff bringbar sind.

3. Gargefäß nach Anspruch 1 oder 2, **dadurch gekennzeichnet, daß** am Dichtring (4) eine Dichtlippe (10) angeordnet ist.

4. Gargefäß nach Anspruch 1, 2 oder 3, **dadurch gekennzeichnet, daß** der Dichtring (4) am Deckel (12) des Gargefäßes (1) angebracht ist.

5. Gargefäß nach einem der vorstehenden Ansprüche, **dadurch gekennzeichnet, daß** sich im geschlossenen Zustand des Gargefäßes (1), der Dichtring (4) und die Dichtlippe (10) entlang der Topfwand (11) des Topfes (2) erstrecken und die den am Topf (2) angeordneten Vertiefungen (19) und/oder Vorsprünge (18) jeweils mit den zugeordneten Vorsprüngen (18) und/oder Vertiefungen (19) des Dichtrings (4) in Eingriff gebracht sind.

6. Gargefäß nach einem der vorstehenden Ansprüche **dadurch gekennzeichnet, daß** im geschlossenen Zustand des Gargefäßes (1) die Vorsprünge (18) und/oder die Vertiefungen (19) des Dichtrings (4) an der Topfwand (11), insbesondere an einem oberen Abschnitt (14) der Topfwand (11) anliegen.

7. Gargefäß nach einem der vorstehenden Ansprüche **dadurch gekennzeichnet, daß** im geschlossenen Zustand des Gargefäßes, die Vorsprünge (18) und/oder die Vertiefungen (19) der Dichtfläche des Dichtrings am Rand der Topfwand (11), insbesondere an dem nach außen gerichteten Rand der Topfwand (11) anliegen.

8. Gargefäß nach einem der vorstehenden Ansprüche **dadurch gekennzeichnet, daß** die Topfwand (11) und oder der Rand der Topfwand (11) eine oder mehrere Vorsprünge (18) oder Vertiefungen (19) aufweist, die in der Topfwand (11) oder im Rand der Topfwand jeweils nach innen oder nach außen gedrückt oder geprägt sind.

9. Gargefäß nach einem der vorstehenden Ansprüche **dadurch gekennzeichnet, daß** die Vorsprünge (18) und/oder Vertiefungen (19) des Dichtrings eine vom Rest des Dichtrings verschiedene Farben aufweisen.

10. Gargefäß nach einem der vorstehenden Ansprüche, **dadurch gekennzeichnet, daß** im geschlossenen Zustand des Gargefäßes (1) die Dichtlippe (10) eng an der Topfwand (11) anliegt und sich bei Erhitzung des Gargefäßes nur dann Dampfdruck im Innern des Gargefäßes (1) aufbaut, wenn die jeweils zugeordneten Vorsprünge (18) die Vertiefungen (19) ineinander greifen
und daß bei nicht vollständig geschlossenem Gargefäß (1) der Dichtring (4) zumindest stellenweise so von der Topfwand (11, 14, 22) weg gedrückt ist, daß zwischen Dichtfläche des Dichtrings (4) und Topfwand (11) eine Lücke besteht.

11. Gargefäß nach einem der vorstehenden Ansprüche **dadurch gekennzeichnet, daß** der Dichtring (4) im geschlossenen Zustand zwischen dem außen gerichteten Rand (3) der Topfwand (11) und dem Deckel (12) angeordnet ist.

12. Gargefäß nach einem der vorstehenden Ansprüche **dadurch gekennzeichnet, daß** im geschlossenen Zustand des Gargefäßes (1) beim Erhitzen in dessen Innern kein erhöhter Dampfdruck entsteht, wenn nicht alle zugeordneten Vorsprünge (18) oder Vertiefungen (19) des Dichtrings (4) den zugeordenten Vorsprüngen (18) oder Vertiefungen (19) in der Topfwand (11) oder im nach außen gerichteten Rand (3) der Topfwand (11) angeordnet sind.

13. Dichtring für ein Gargefäß, insbesondere für ein Gargefäß nach einem der vorstehenden Ansprüche umfassend zumindest einen Vorsprung (18) oder zumindest eine Vertiefung (19), welche in Richtung einer Dichtfläche des Dichtrings (14) weisen.

14. Deckel für ein Gargefäß, insbesondere für ein Gargefäß nach einem der vorstehenden Ansprüche von 1 bis 12 umfassend einen Dichtring (4) gemäß Anspruch 13.
